# EUROPEAN PATENT APPLICATION

(11) **EP 1 496 460 A1**
(43) Date of publication of application: **12.01.2005**
(21) Application number: 04015250.6
(22) Date of filing: 29.06.2004
(51) Int. Cl.: G06F 17/60

(54) **Sorting apparatus and address information determination method**

(30) Priority: 08.07.2003 JP 2003193792
(71) Applicant: Kabushiki Kaisha Toshiba, Tokyo 105-8001 (JP)
(72) Inventor: Aoki, Yasuhiro, Tokyo 105-8001 (JP); Irie, Bunpei, Tokyo 105-8001 (JP); Horiuchi, Hideo, Tokyo 105-8001 (JP); Akagi, Takuma, Tokyo 105-8001 (JP); Hamamura, Tomoyuki, Tokyo 105-8001 (JP); Natori, Naotake, Tokyo 105-8001 (JP); Nakao, Akihiko, Tokyo 105-8001 (JP)
(74) Representative: Kramer Barske Schmidtchen

(57) **Abstract**

An international mail determination unit (60A) determines whether or not the postal matter of interest is foreign mail, on the basis of the collation results of the seal description information collation unit (51), address format collation unit (52), address word collation unit (53), delivery area code format collation unit (54), and country name identification word collation unit (55) (or some of these units). When the international mail determination unit (60A) determines that the postal matter of interest is foreign mail, the country name determination unit (60B) determines a country as a destination of that postal matter on the basis of the collation results of the above five collation units (51 to 55) (or some of these units).

## Description

The present invention relates to a sorting apparatus for executing a sorting process of deliveries described with addresses, and an address information determination method to be applied to the sorting apparatus.

A mail address automatic reader/sorter which optically reads address information on sheets attached to postal matters, and sorts postal matters is known. A sorter of this type is generally designed for domestic mail. That is, the sorter recognizes addresses (temporary residences) in address information using a dictionary in which individual address data in a country, where that sorter is used, are registered, and sorts postal matters based on the addresses.

On the other hand, since the sorter cannot cope with international mail addressed to foreign countries, a seal or the like indicating international mail is put on each postal matter, thus manually sorting postal matters.

Not only the dictionary registered with domestic address data but also a dictionary registered with foreign address data may be installed in the sorter to cope with international mail. For example, Jpn. Pat. Appln. KOKAI Publication No. 2002-245470 discloses a technique for specifying a language of a written document by collating it using a character pattern stored in a character pattern data storage unit. Upon recognizing an address written in a foreign language, the technique of this reference may be applied.

However, the aforementioned operations for determining the destination country names by checking seals or the like put on international mail and sorting these postal matters require much labor and time, resulting in poor efficiency.

When the dictionary registered with foreign address data is installed in the sorter, it is required to provide a storage medium having a capacity that can sufficiently store a huge volume of address data of every countries, and an advanced search device that can conduct quick search, resulting in very high cost.

Embodiments of the present invention may provide a sorting apparatus and address information determination method, which can efficiently determine destinations of deliveries such as postal matters and the like.

According to one aspect of the present invention, there is provided a sorting apparatus for executing a sorting process of deliveries with addresses, comprising a storage unit which stores at least one of i) a seal description information database which registers description information of a seal indicating foreign mail in a predetermined country, ii) an address format database which registers a plurality of types of address formats associated with an arrangement of individual elements that form a description of an address in correspondence with country groups, iii) an address word database which registers specific words used to describe addresses of respective countries in native languages in correspondence with countries, iv) a delivery area code format information database which registers information indicating description formats of delivery area codes of respective countries in correspondence with countries, and v) a country name identification word database which registers country name identification words used to identify respective countries in correspondence with countries; a reading unit which reads information on a sheet attached to the postal matter; a recognition unit which recognizes an address region on the sheet from the information read by the reading unit; a detection unit which executes at least one of i) detection of the seal description information, ii) detection of an address format associated with an arrangement of individual elements which forms an address description, iii) detection of a specific word included in an address, iv) detection of a description format of a delivery area code, and v) detection of a country name identification word, from the information of the address region recognized by the recognition unit; a collation unit which executes at least one of i) collation of the seal description information detected by the detection unit with reference to the seal description information database in the storage unit, ii) collation of the address format detected by the detection unit with reference to the address format database in the storage unit, iii) collation of the word detected by the detection unit with reference to the address word database in the storage unit, iv) collation of the description format of the delivery area code detected by the detection unit with reference to the delivery area code format information database in the storage unit, and v) collation of the country name identification word detected by the detection unit with reference to the country name identification word database in the storage unit; and a first determination unit which determines, on the basis of respective collation results of the collation unit, whether or not the delivery is foreign mail.

According to another aspect of the present invention, there is provided an address information determination method, which is applied to a sorting apparatus for executing a sorting process of deliveries with addresses, comprising saving, in one storage medium, at least one of i) a seal description information database which registers description information of a seal indicating foreign mail in a predetermined country, ii) an address format database which registers a plurality of types of address formats associated with an arrangement of individual elements that form a description of an address in correspondence with country groups, iii) an address word database which registers specific words used to describe addresses of respectively countries in native languages in correspondence with countries, iv) a delivery area code format information database which registers information indicating description formats of delivery area codes of respective countries in correspondence with countries, and v) a country name identification word database which registers country name identification words used to identify respective countries in correspondence with countries; reading information on a sheet attached to the postal matter; recognizing an address region on the sheet from the read information; executing at least one of i) detection of the seal description information, ii) detection of an address format associated with an arrangement of individual elements which forms an address description, iii) detection of a specific word included in an address, iv) detection of a description format of a delivery area code, and v) detection of a country name identification word, from the recognized information of the address region; executing at least one of i) collation of the seal description information detected by the detection with reference to the seal description information database in the storage medium, ii) collation of the address format detected by the detection with reference to the address format database in the storage medium, iii) collation of the word detected by the detection with reference to the address word database in the storage medium, iv) collation of the description format of the delivery area code detected by the detection with reference to the delivery area code format information database in the storage medium, and v) collation of the country name identification word detected by the detection with reference to the country name identification word database in the storage medium; and making first determination as to whether or not the delivery is foreign mail on the basis of respective collation results in the collation.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an outline view showing a sorter according to an embodiment of the present invention;
FIG. 2 is a schematic view showing the arrangement of the sorter;
FIG. 3 is a view for explaining the surface of a sheet attached to a postal matter;
FIG. 4 is a view for explaining information included in an address region on the sheet;
FIG. 5 is a block diagram showing details of an information processor;
FIG. 6 is a block diagram showing details of an address information determination unit and storage unit;
FIG. 7 shows examples of information registered in a seal description information DB;
FIG. 8 shows examples of information registered in an address format DB;
FIG. 9 shows examples of information registered in an address word DB;
FIG. 10 shows examples of information registered in a delivery area code format information DB and country name identification word DB; and
FIG. 11 is a flowchart for explaining a country name determination operation.

Embodiments of the present invention will be described below with reference to the drawings.

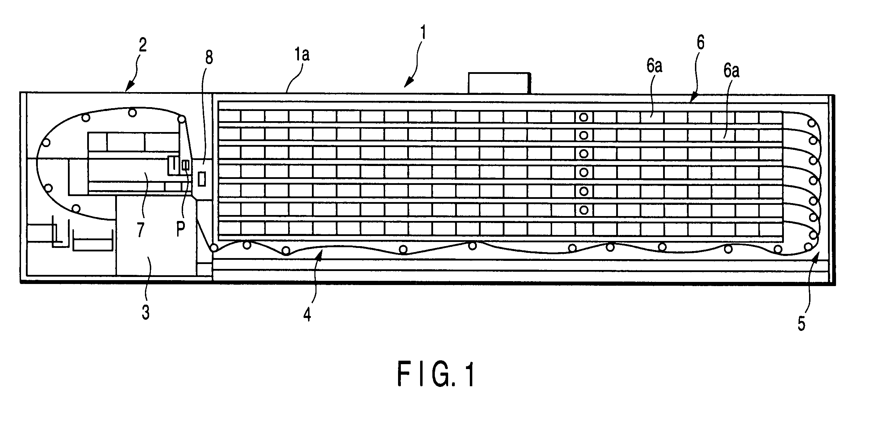

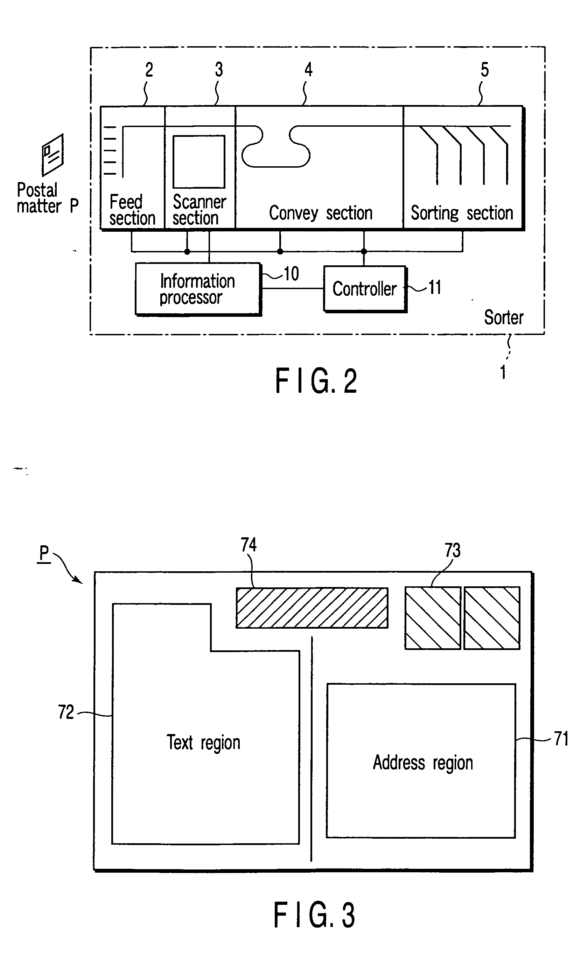

FIG. 1 is an outline view showing a sorter 1 according to an embodiment of the present invention, and FIG. 2 is a schematic view showing the arrangement of the sorter 1. The sorter 1 has a large box-shaped sorter main body 1a. This sorter 1 reads information on each postal matter P, recognizes an address region, a seal region, and the like from the read contents, and sorts that postal matter P to a corresponding sort destination on the basis of the recognition result.

The sorter main body 1a includes a feed section 2, scanner section (reading means) 3, convey section 4, sorting section 5, and storage section 6. Postal matters P fed from the feed section 2 are conveyed along a convey path, and are guided to the storage section 6 via the convey section 4 and sorting section 5 in turn.

The feed section 2 has a table 7 on which postal matters P are placed, and a pickup unit 8 that picks up postal matters P from the table 7 one by one and feeds them onto the convey path. The scanner section 3 optically reads an overall image of each individual postal matter P conveyed by the convey path, and generates image information. The convey section 4 conveys postal matters P which have left the scanner section 3 to the sorting section 5. The storage section 6 has a large number of storage pockets 6a which store sorted postal matters P. The sorting section 5 sorts postal matters P conveyed from the convey section 4 to corresponding ones of the storage pockets 6a on the basis of the recognition results (to be described later) of image information from the scanner section 3.

The scanner section 3 is reading means which reads information on a sheet as a pattern signal by optically scanning the surface of each postal matter P, and photoelectrically converting the scanned data. The scanner section 3 includes, e.g., a light source for irradiating the surface of each postal matter P with light, a self-scan type CCD image sensor for receiving light reflected by the postal matter and converting it into an electrical signal, and the like. The output from the scanner section 3 is supplied to a recognition unit in an information processor 10.

In the sorter 1, the feed section 2, scanner section 3, convey section 4, sorting section 5, and information processor 10 are connected to a controller 11. This controller 11 controls the operations of the overall sorter 1. For example, the controller 11 reads out sorting designation data corresponding to the recognition results (or determination results) in the information processor 10 using a sorting designation table stored in a memory (not shown), and controls to convey the postal matters P to the storage pockets 6a corresponding to the readout sorting designation data (the addresses of the storage pockets 6a).

Furthermore, the controller 11 controls the overall convey system by driving a convey mechanism (not shown) such as the convey path and the like by a driver (not shown).

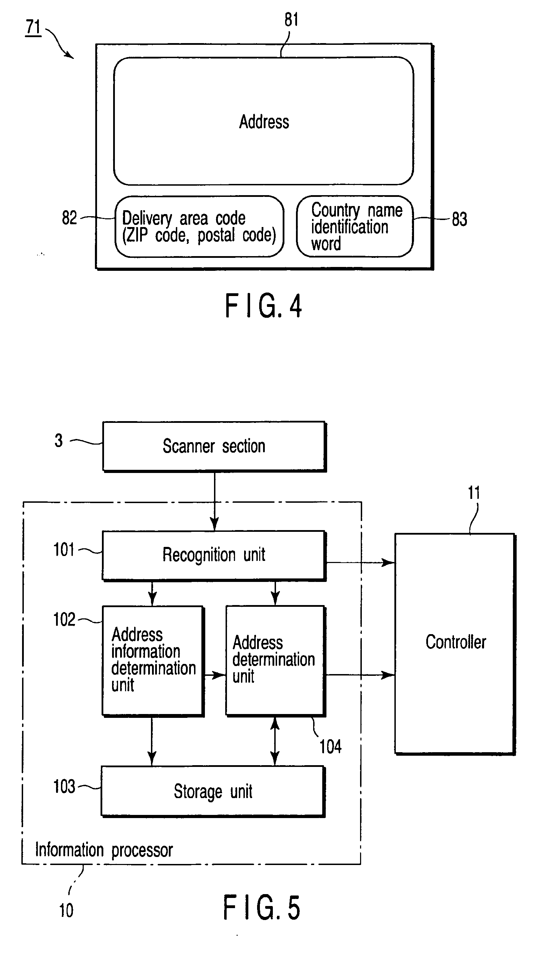

The surface of a sheet attached to each postal matter P includes an address region 71 that describes an address, and a text region 72 that describes text, and a stamp 73 is stuck on the surface, as shown in FIG. 3. In case of overseas mail, a seal 74 indicating overseas mail is put on the surface. The address region 71 describes a delivery area code (ZIP code, postal code) 82 in a predetermined format, and a country name identification word (an abbreviation of a country name or the like) 83 used to identify each country in addition to a destination address (or temporary residence) 81, as shown in FIG. 4. The delivery area code 82 and country name identification word 83 may be omitted in some cases.

As shown in FIG. 5, the information processor 10 includes a recognition unit (recognition means) 101, address information determination unit 102, storage unit (storage means or storage medium) 103, and address determination unit 104.

The recognition unit 101 recognizes regions such as the address region 71, seal 74, and the like on each postal matter P from an image supplied from the scanner section 3. More specifically, the recognition unit 101 recognizes format information such as an address format, character string, delivery area code, delivery area code frame, and the like associated with an address in the address region 71, and description information of the seal 74. The recognition unit 101 has various dictionaries registered with domestic address data, delivery area codes, and the like, and can also recognize character strings of addresses and delivery area codes of domestic postal matters using these dictionaries.

The address information determination unit 102 detects i) a specific word included in an address, ii) a description format of a delivery area code, and iii) a country name identification word from the information of the address region 71 recognized by the recognition unit 101. The unit 102 collates the detected words and the like by referring to various databases (to be abbreviated as DBs hereinafter) in the storage unit 103, and determines a country name as a destination of each postal matter P on the basis of the collation results. The determination result obtained by the unit 102 is supplied to the controller 11.

The storage unit 103 stores various DBs (to be described later) accessed by the address information determination unit 102.

The address determination unit 104 obtains a character string of an address from the recognition unit 101 when the recognition unit 101 has succeeded to recognize the character string of the address. When the recognition unit 101 has failed to recognize the character string of the address, the address determination unit 104 determines to execute a reject process or determines an address by searching a predetermined database in the storage unit 103 for a character string which is most approximate to the character string of the address recognized by the recognition unit 101. The character string of the address obtained by the unit 104 is supplied to the controller 11 as the address determination result.

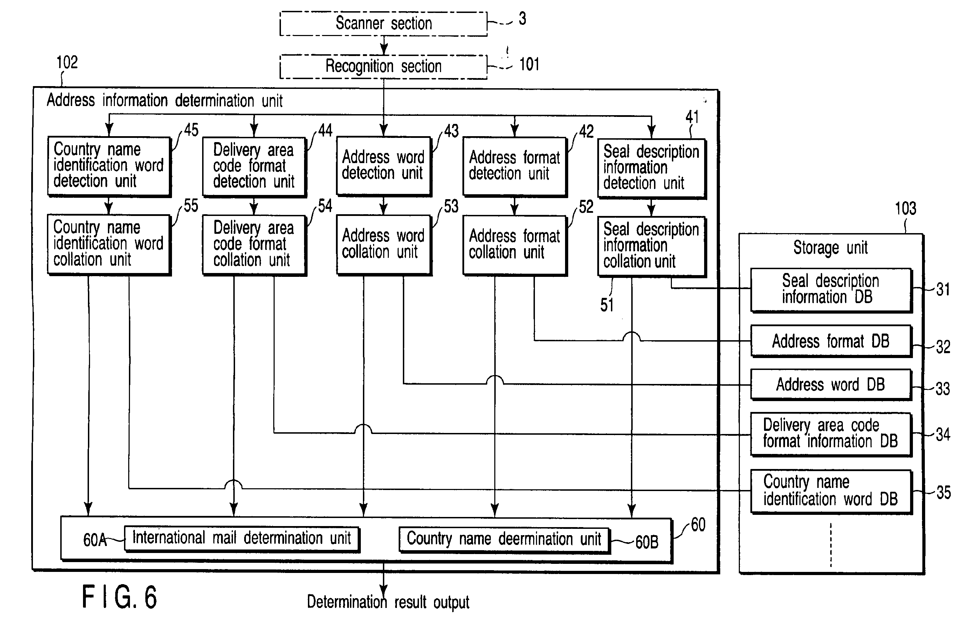

Details of the address information determination unit 102 and storage unit 103 will be described below with reference to FIG. 6.

The storage unit 103 stores various DBs such as a seal description information DB 31, address format DB 32, address word DB 33, delivery area code format information DB 34, country name identification word DB 35, and the like.

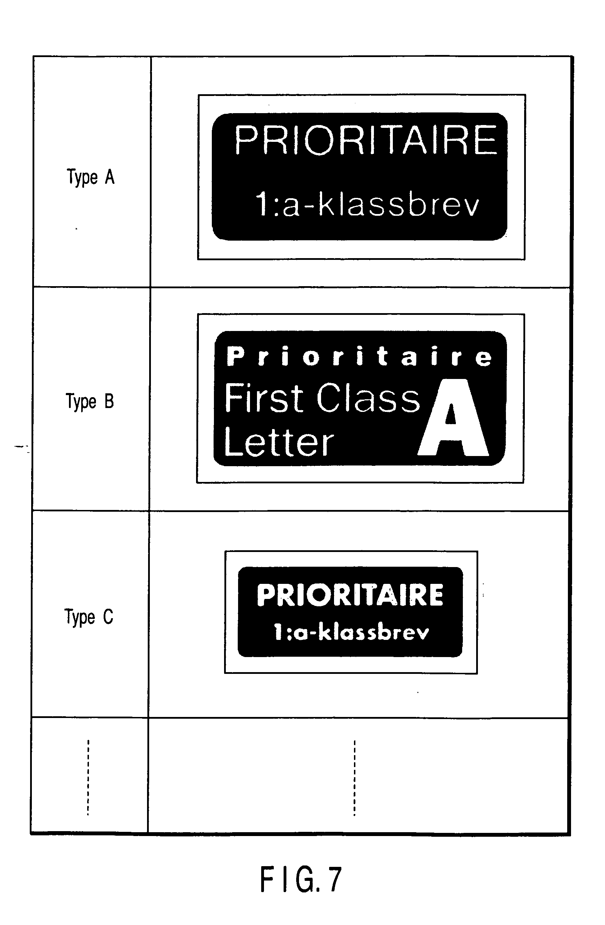

The seal description information DB 31 registers description information of seals indicating foreign mail in a home country (e.g., Sweden) to which the sorter 1 is applied. More specifically, as shown in FIG. 7, the seal description information DB 31 registers image information of designs described on various seals (type A, type B, type C,...) which are distributed in the home country. Various seals are arranged in descending order of, e.g., frequency of use, and undergo a collation process in this order. If a seal of interest matches one of these types A, B, C,..., it is determined that the postal matter P of interest is foreign mail.

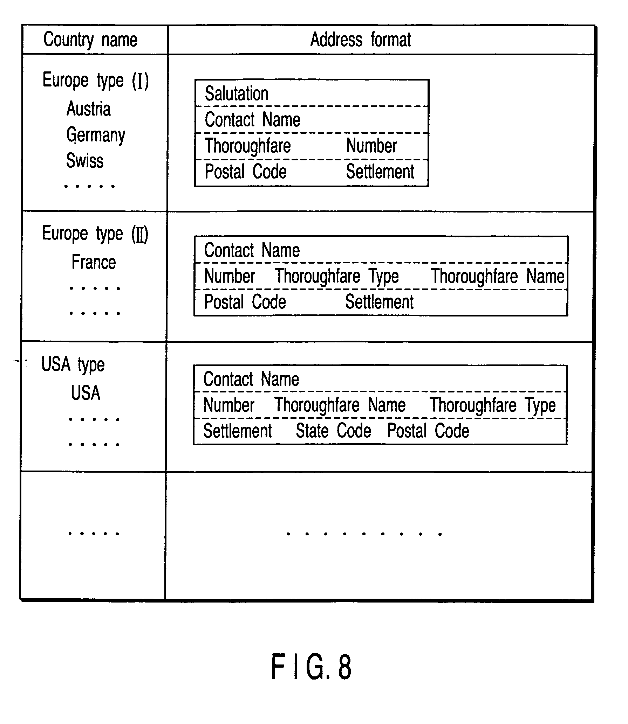

The address format DB 32 registers a plurality of types of address formats associated with arrangements of individual elements which form address descriptions for respective country groups (or respective countries). More specifically, as shown in FIG. 8, the address format DB 32 registers various address formats such as Europe type (I), Europe type (II), USA type, and the like.

In the Europe type (I) address format in FIG. 8, "salutation" (a phrase of the beginning) is often set in the first line (optional). In the second line, "contact name" (personal name, corporate name, or the like) is set. In the third line, "thoroughfare" (street, road, avenue, or the like) is set, and "number" (the number of the thoroughfare) is set on the right side of the thoroughfare. In the fourth line, "postal code" is set, and "settlement" (city name, district name, or the like) is set on the right side of the postal code.

In the Europe type (II) address format in FIG. 8, "contact name" (personal name, corporate name, or the like) is set in the first line. In the second line, "number" (the number of a thoroughfare), "thoroughfare type", and "thoroughfare name" are set in turn from the left. In the third line, "postal code" is set, and "settlement" (city name, district name, or the like) is set on the right side of the postal code.

In the USA type address format in FIG. 8, "contact name" (personal name, corporate name, or the like) is set in the first line. In the second line, "number" (the number of a thoroughfare), "thoroughfare name", and "thoroughfare type" are set in turn from the left. In the third line, "settlement", "state code", and "postal code" are set in turn from the left.

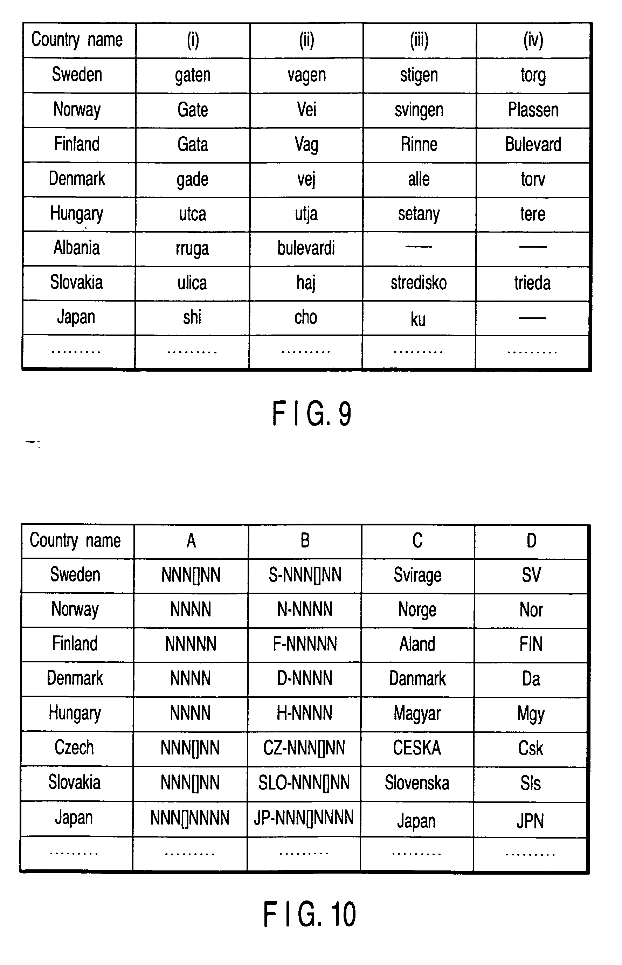

The address word DB 33 registers specific words used to describe addresses of respective countries in native languages in correspondence with countries. More specifically, as shown in FIG. 9, the address word DB 33 registers a plurality of types of words that express "area" (city, town, county, or the like) or "thoroughfare" (street, road, avenue, or the like) of respective countries in native languages in correspondence with countries. In this case, these words are arranged in descending order of frequency of use. For example, words are arranged so that the frequency of use of words corresponding to item (i) in FIG. 9 is highest, and gradually lowers in the order of item (ii), item (iii), and item (iv). Scores may be added to respective words, and may be used upon determining a country name by a country name determination unit 60B (to be described later). In this case, higher scores are assigned to words with higher frequencies of use. In this way, the country name determination unit 60B assigns higher scores to words with higher frequencies of use, and calculates a total of scores for each country.

The delivery area code format information DB 34 registers information indicating the description formats of delivery area codes (ZIP code, postal code) of respective countries in correspondence with countries. For example, the delivery area code format information DB 34 registers a plurality of types of information indicating description formats for respective countries, as indicated by items A and B in FIG. 10. "N" in FIG. 10 corresponds to a numeral for one digit, and "[]" corresponds to a space (or hyphen). Each delivery area code in item B has a format formed by adding an acronym of a given country to the head of a delivery area code in item A.

The country name identification word DB 35 registers country name identification words used to identify respective countries in correspondence with countries. For example, the country name identification word DB 35 registers a plurality of types of information indicating a plurality of types of description formats, as indicated by items C and D in FIG. 10. In the example of FIG. 10, words in item C express country names in languages (native languages) of the corresponding countries. Also, words in item D are abbreviated names of the country names.

On the other hand, the address information determination unit 102 includes a seal description information detection unit (detection means) 41, address format detection unit (detection means) 42, address word detection unit (detection means) 43, delivery area code format detection unit (detection means) 44, country name identification word detection unit (detection means) 45, seal description information collation unit (collation means) 51, address format collation unit (collation means) 52, address word collation unit (collation means) 53, delivery area code format collation unit (collation means) 54, country name identification word collation unit (collation means) 55, and determination unit (determination means) 60.

The seal description information detection unit 41 detects description information of the seal 74 from the information recognized by the recognition unit 101 (including detection as to whether a seal exists or not). The address format detection unit 42 detects an address format from the information of the address region 71 recognized by the recognition unit 101. The address word detection unit 43 detects a specific word included in an address from the information of the address region 71 recognized by the recognition unit 101. The delivery area code format detection unit 44 detects the description format of a delivery area code from the information of the address region 71 recognized by the recognition unit 101. The country name identification word detection unit 45 detects a country name identification word from the information of the address region 71 recognized by the recognition unit 101. When the delivery area code and country name identification word are not described in the address region 71, they are not detected as a matter of course.

The seal description information collation unit 51 collates seal description information detected by the seal description information detection unit 41 with reference to the seal description information DB 31. For example, when the detected seal description information matches one of type A, type B, type C, ... prepared in the seal description information DB 31, the unit 51 outputs a result indicating that the postal matter P of interest is foreign mail; otherwise, the unit 51 outputs a result indicating that the postal matter P of interest is another mail. The address format collation unit 52 collates the address format detected by the address format detection unit 42 with reference to the address format DB 32. For example, the unit 52 outputs information indicating a country group to which the detected address format belongs. The address word collation unit 53 collates the word detected by the address word detection unit 43 with reference to the address word DB 33. In this case, the detected words may be collated by using juncture information (association information) such as bi-gram information, tri-gram information, and the like associated with an alphabet sequence. The delivery area code format collation unit 54 collates the description format of the delivery area code detected by the delivery area code format detection unit 44 with reference to the delivery area code format information DB 34. The country name identification word collation unit 55 collates the country name identification word detected by the country name identification word detection unit 45 with reference to the country name identification word DB 35. The collation results of the collation units 52 to 55 are expressed in the form of, e.g., scores.

The determination unit 60 includes an international mail determination unit 60A and country name determination unit 60B.

The international mail determination unit 60A determines whether or not the postal matter P of interest is foreign mail, on the basis of the collation results of the seal description information collation unit 51, address format collation unit 52, address word collation unit 53, delivery area code format collation unit 54, and country name identification word collation unit 55 (or some of these units). For example, the international mail determination unit 60A may acquire the collation results of the collation units 51 to 55 in the form of scores, and may make determination by checking if the total of these score exceeds a threshold value. In this case, after the scores of the collation results of the collation units 52 to 55 are multiplied by different weighting coefficients, their total may be calculated. The international mail determination unit 60A may make determination based on only the collation results of the seal description information collation unit 51 and the address format collation unit 52.

When the international mail determination unit 60A determines that the postal matter P of interest is foreign mail, the country name determination unit 60B determines a country as a destination of that postal matter P on the basis of the collation results of the seal description information collation unit 51, address format collation unit 52, address word collation unit 53, delivery area code format collation unit 54, and country name identification word collation unit 55 (or some of these units). For example, the country name determination unit 60B acquires the collation results of the collation units 53 to 55 in the form of scores for each country, and determines a country with the highest total of scores as a destination of the postal matter. In this case, after the scores of the collation results of the collation units 53 to 55 may be multiplied by different weighting coefficients, the total of the scores for each country may be calculated (for example, after the collation result of the delivery area code format collation unit 54 may be multiplied by a coefficient = 0.8, the collation result of the country name identification word collation unit 55 may be multiplied by a coefficient = 0.5, and the collation result of the address word collation unit 53 may be multiplied by a coefficient = 0.4, the total of the obtained products may be calculated for each country). In this manner, the country name determination precision can be further improved.

The example of the arrangement shown in FIG. 6 includes all of i) a combination of the seal description information DB 31, seal description information detection unit 41, and seal description information collation unit 51, ii) a combination of the address format DB 32, address format detection unit 42, and address format collation unit 52, iii) a combination of the address word DB 33, address word detection unit 43, and address word collation unit 53, iv) a combination of the delivery area code format information DB 34, delivery area code format detection unit 44, and delivery area code format collation unit 54, and v) a combination of the country name identification word DB 35, country name identification word detection unit 45, and country name identification word collation unit 55. However, all these combinations need not always be provided, and at least one of these combinations may be provided.

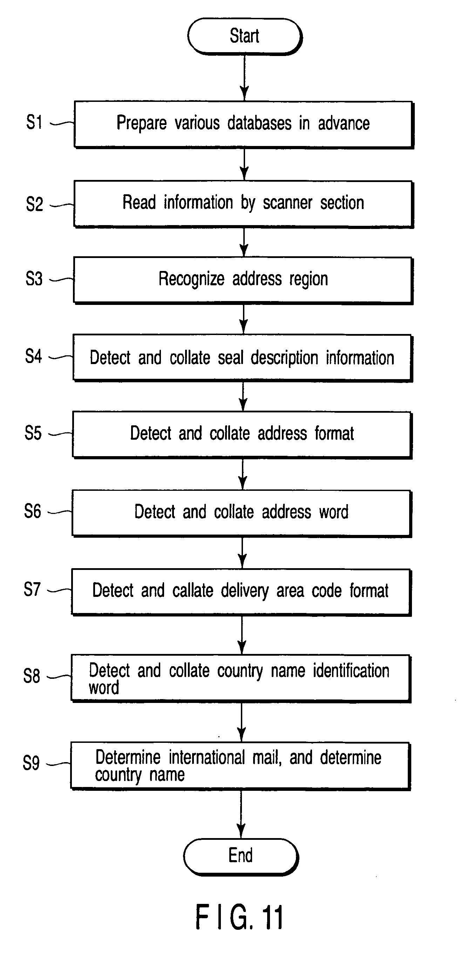

The address information determination operation in this embodiment will be described below with reference to FIG. 11.

Various DBs such as the seal description information DB 31, address format DB 32, address word DB 33, delivery area code format information DB 34, country name identification word DB 35, and the like are prepared in advance, and are saved in the storage unit 103 (step S1).

When a postal matter P is fed to the sorter 1, information of the postal matter P is read by the scanner section 3 (step S2), and the recognition unit 101 recognizes the contents of the address region 71 on the postal matter P (step S3).

The seal description information detection unit 41 detects seal description information from the seal 74 recognized by the recognition unit 101. The seal description information collation unit 51 collates the detected seal description information with reference to the seal description information DB 31 (step S4).

The address format detection unit 42 detects an address format from the information of the address region 71 recognized by the recognition unit 101. The address format collation unit 52 collates the detected address format with reference to the address format DB 32 (step S5).

The address word detection unit 43 detects a specific word included in an address from the information of the address region 71 recognized by the recognition unit 101. The address word collation unit 53 collates the detected word with reference to the address word DB 33 (step S6).

The delivery area code format detection unit 44 detects the description format of a delivery area code from the information of the address region 71 recognized by the recognition unit 101. The delivery area code format collation unit 54 collates the detected description format of the delivery area code with reference to the delivery area code format information DB 34 (step S7).

The country name identification word detection unit 45 detects a country name identification word from the information of the address region 71 recognized by the recognition unit 101. The country name identification word collation unit 55 collates the detected country name identification word with reference to the country name identification word DB 35 (step S8).

Finally, the international mail determination unit 60A determines based on at least one of the five collation results whether or not the postal matter P of interest is foreign mail. If the postal matter P of interest is domestic mail, the control is passed to the address determination unit 104, which makes domestic address determination. On the other hand, if the postal matter P of interest is foreign mail, the country name determination unit 60B determines a country name as a destination of the postal matter P on the basis of at least one of the five collation results (step S9).

As described above, according to this embodiment, the need for manual operations for determining the country names and the like of destinations by checking seals put on international postal matters and sorting these postal matters can be obviated, thus reducing wasteful labor and time. Since no storage medium or the like having a capacity that can sufficiently store a huge volume of address data of every countries need be arranged, no extra cost is required.

As described above, according to the present invention, a destination of a delivery such as a postal matter or the like can be efficiently determined.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A sorting apparatus for executing a sorting process of deliveries with addresses, **characterized by** comprising:
storage means (103) for storing at least one of i) a seal description information database which registers description information of a seal indicating foreign mail in a predetermined country, ii) an address format database which registers a plurality of types of address formats associated with an arrangement of individual elements that form a description of an address in correspondence with country groups, iii) an address word database which registers specific words used to describe addresses of respective countries in native languages in correspondence with countries, iv) a delivery area code format information database which registers information indicating description formats of delivery area codes of respective countries in correspondence with countries, and v) a country name identification word database which registers country name identification words used to identify respective countries in correspondence with countries;
reading means (3) for reading information on a sheet attached to the postal matter;
recognition means (101) for recognizing an address region on the sheet from the information read by the reading means;
detection means (41 to 45) for executing at least one of i) detection of the seal description information, ii) detection of an address format associated with an arrangement of individual elements which forms an address description, iii) detection of a specific word included in an address, iv) detection of a description format of a delivery area code, and v) detection of a country name identification word, from the information of the address region recognized by the recognition means;
collation means (51 to 55) for executing at least one of i) collation of the seal description information detected by the detection means with reference to the seal description information database in the storage means, ii) collation of the address format detected by the detection means with reference to the address format database in the storage means, iii) collation of the word detected by the detection means with reference to the address word database in the storage means, iv) collation of the description format of the delivery area code detected by the detection means with reference to the delivery area code format information database in the storage means, and v) collation of the country name identification word detected by the detection means with reference to the country name identification word database in the storage means; and
first determination means (60A) for determining, on the basis of respective collation results of the collation means, whether or not the delivery is foreign mail.

2. The apparatus according to claim 1, **characterized by** further comprising:
second determination means (60B) for determining a country name as a destination of the delivery on the basis of the respective collation results of the collation means, when the first determination means determines that the delivery is foreign mail.

3. The apparatus according to claim 1 or 2, **characterized in that** the address word database (33) registers words indicating areas or thoroughfares in respective countries in correspondence with countries.

4. The apparatus according to claim 2 or 3, **characterized in that**:
the collation means (51 to 55) executes not less than two collations, and
the second determination means (60B) acquires respective collation results of the collation means as scores for each country, and determines that a country with a highest total of scores is a destination of the delivery.

5. The apparatus according to claim 4, **characterized in that** the second determination means (60B) multiplies the scores of the collation results of the collation means by different weighting coefficients, and then calculates a total of the scores for each country.

6. The apparatus according to claim 4 or 5, **characterized in that**:
various words used to describe addresses in respective countries are registered in the address word database (33) in descending order of frequency of use, and
the second determination means (60B) assigns higher scores to words with higher frequencies of use, and then calculates a total of the scores for each country.

7. An address information determination method, which is applied to a sorting apparatus for executing a sorting process of deliveries with addresses, **characterized by** comprising:
saving, in one storage medium, at least one of i) a seal description information database which registers description information of a seal indicating foreign mail in a predetermined country, ii) an address format database which registers a plurality of types of address formats associated with an arrangement of individual elements that form a description of an address in correspondence with country groups, iii) an address word database which registers specific words used to describe addresses of respectively countries in native languages in correspondence with countries, iv) a delivery area code format information database which registers information indicating description formats of delivery area codes of respective countries in correspondence with countries, and v) a country name identification word database which registers country name identification words used to identify respective countries in correspondence with countries (S1);
reading information on a sheet attached to the postal matter (S2);
recognizing an address region on the sheet from the read information (S3);
executing at least one of i) detection of the seal description information, ii) detection of an address format associated with an arrangement of individual elements which forms an address description, iii) detection of a specific word included in an address, iv) detection of a description format of a delivery area code, and v) detection of a country name identification word, from the recognized information of the address region (S4 to S8);
executing at least one of i) collation of the seal description information detected by the detection with reference to the seal description information database in the storage medium, ii) collation of the address format detected by the detection with reference to the address format database in the storage medium, iii) collation of the word detected by the detection with reference to the address word database in the storage medium, iv) collation of the description format of the delivery area code detected by the detection with reference to the delivery area code format information database in the storage medium, and v) collation of the country name identification word detected by the detection with reference to the country name identification word database in the storage medium (S4 to S8); and
making first determination as to whether or not the delivery is foreign mail on the basis of respective collation results in the collation (S9).

8. The method according to claim 7, **characterized by** further comprising:
making second determination of a country name as a destination of the delivery on the basis of the respective collation results in the collation, when it is determined in the first determination that the delivery is foreign mail (S9).

9. The method according to claim 7 or 8, **characterized in that** the address word database registers words indicating areas or thoroughfares in respective countries in correspondence with countries.

10. The method according to claim 8 or 9, **characterized in that**:
the collation comprises executing not less than two collations (S4 to S8), and
the second determination comprises acquiring respective collation results in the collation as scores for each country, and determining that a country with a highest total of scores is a destination of the delivery (S9).

11. The method according to claim 10, **characterized in that** the scores of the collation are multiplied by different weighting coefficients, and a total of the scores are then calculated for each country (S9).

12. The method according to claim 10 or 11, **characterized in that**:
various words used to describe addresses in respective countries are registered in the address word database in descending order of frequency of use (S1), and
the second determination comprises assigning higher scores to words with higher frequencies of use, and then calculating a total of the scores for each country (S9).
